# EUROPEAN PATENT SPECIFICATION

(11) **EP 3 319 144 B1**
(45) Date of publication and mention of the grant of the patent: **29.01.2020**
(21) Application number: 16196848.2
(22) Date of filing: 02.11.2016
(51) Int. Cl.: H01M 2/04, H01M 2/08, H01M 2/02

(54) **ENERGY STORAGE DEVICE**
ENERGIESPEICHERVORRICHTUNG
DISPOSITIF DE STOCKAGE D'ÉNERGIE

(43) Date of publication of application: 09.05.2018
(73) Proprietor: Robert Bosch GmbH, 70442 Stuttgart (DE); GS Yuasa International Ltd., Kyoto-shi, Kyoto 601-8520 (JP)
(72) Inventor: Riege, Uwe, 71640 Ludwigsburg (DE); Enomoto, Yukio, Osaka, Osaka 574-0043 (JP); Gossen, Bernhard, 71691 Freiberg Am Neckar (DE); Weber, Ottmar, 97496 Burgpreppach (DE); Gerlach, Martin, 96129 Strullendorf (DE); Kawate, Kenji, Osaka-fu, Osaka 566-0001 (JP); Daske, Tim, 71638 Ludwigsburg (DE); Feirabend, Bernd, 71720 Oberstenfeld (DE)
(74) Representative: Isarpatent

(56) References cited:
- EP-A1- 2 752 919
- EP-A1- 3 024 060
- JP-A- H1 125 993

## Description

### TECHNICAL FIELD

The present invention relates to an energy storage device including an electrode assembly, a case that stores the electrode assembly, an upper spacer and an inner gasket according to the preamble of the independent claim.

### BACKGROUND ART

A conventional energy storage device including an electrode assembly and a case that stores the electrode assembly is known with an insulating member that insulates a conductive member from the case. For example, Patent Document 1 discloses a battery in which a base is locked at a whirl-stop portion of a cover plate to limit rotation of an external terminal about an axis of a bolt. In the battery, the external terminal is disposed on the whirl-stop portion of the cover plate via a terminal insulating member. Patent Document 2 discloses a prismatic battery with highly reliable sealing properties and its manufacturing method, wherein the electrode pole is fitted into a support cylinder that is provided on an upper lid for closing one open end of a case. An insulating gasket is interposed between an inner periphery of the support cylinder and an outer periphery of the electrode pole. Patent Document 3 discloses a sealed battery which comprises a sealing assembly with a sealing plate and a spacer, which is provided below the sealing plate. A negative electrode terminal penetrates through the center of the sealing plate and the spacer via a gasket. Patent Document 4 discloses an energy storage device including an electrode assembly, a case and a conductive member electrically connected to the electrode assembly. Further energy storage devices known from prior art are disclosed in patent documents 5 and 6.

### PRIOR ART DOCUMENTS

### PATENT DOCUMENTS

Patent Document 1: JP-A-2010-97822
Patent Document 2: US 2005/0118501
Patent Document 3: US 2008/0241679
Patent Document 4: JP2015-186088
Patent Document 5: EP 3 024 060 A1
Patent Document 6: JP H11 25993 A

### DISCLOSURE OF THE INVENTION

The object of the present invention is to provide an energy storage device provided with an upper spacer and an inner gasket, whereat the upper spacer and the inner gasket are connected tight in an easy manner without wasting space in the energy storage device.

To attain the object, an energy storage device includes an electrode assembly, a case that stores the electrode assembly, an upper spacer and an inner gasket, provided with the characterizing features of the independent claims. According to the present invention the upper spacer comprises at least one breakthrough and the inner gasket comprises at least one protruding part whereat the at least one protruding part of the inner gasket is insertable into the at least one breakthrough of the upper spacer or the upper spacer and the inner gasket are formed as one single component.

The advantage of an upper spacer comprising at least one breakthrough and an inner gasket comprising at least one protruding part whereat the at least one protruding part of the inner gasket is insertable into the at least one breakthrough of the upper spacer is, that this type of connection is very simple, easy to manufacture and inexpensive. Moreover there is no additional space needed for an attachment compound in the energy storage device, like for example a clip, an attachment portion or the like. Moreover there is no additional weight of such an attachment portion in the energy storage device.

The advantage of an upper spacer and an inner gasket being formed as one single component is, that the component is manufactured very fast and simple, for example by injection molding. Furthermore no additional mounting step is needed and the fixation of the electrode assembly between the cover plate and the bottom of the can is very easy. By having only one single component no joining of different components is necessary and therefore the assembly is more fast and easy and no additional space for an attachment component is needed in the energy storage device.

In the energy storage device the inner gasket is disposed between a conductive member and a wall of a case. In the energy storage device according to one aspect of the present invention, the conductive member may be a current collector disposed in the case, the current collector being configured to electrically connect the electrode assembly to an electrode terminal fixed to the case, An inner gasket may be at least partially disposed between the current collector and an inner face of the wall,

Further advantageous embodiments of the present energy storage device arise from the dependent claims.

In an advantageous embodyment the inner wall of the breakthrough of the upper spacer and the protruding part of the inner gasket are interconnected by thermofixing. By using thermofixing a very thight connection is achieved in short time.

In an advantageous embodiment the single component comprises a spacer. The spacer for example surrounds the safety valve from the inner side of the cover plate. The spacer compensates tolerances of the electrode assembly. This is advantageous because no cushion sheet on the bottom of the energy storage device is needed witch normally serves as to compensates tolerances. The material of the spacer comprises for example a foam of polypropylene and/or a polycarbonate.

In an advantageous embodiment the energy storage device is accommodated in a, particularly prismatic, case comprising a can and a cover plate, whereat the inner gasket or the one single component is located at the cover plate of the case.

In another alternative or additional advantageous embodiment the upper spacer separates a bonded portion of tabs of the electrode assembly and an electrode lead plate in a way that limits a movement of the electrode assembly.

In a further embodiment the upper spacer has at least two openings through which tabs of the electrode assembly pass.

In one embodiment the upper spacer is made of an insulating material, particularly of polycarbonate, polypropylene, polyethylene or polyphenylene sulfide resin.

The inner gasket is disposed between a conductive member and a wall of the case and functions in an advantageous embodiment as an insulating member. Advantageously this prevents for example a short circuit and therefore increases the safety of the energy storage device. In an embodiment the energy storage device has two inner gaskets and one upper spacer.

### BRIEF DESCRIPTION OF THE DRAWINGS

Fig. 1 is a perspective view illustrating outer appearance of an energy storage device in accordance with a first embodiment.
Fig. 2 is an exploded perspective view illustrating the energy storage device in the first embodiment.
Fig. 3 is an exploded perspective view illustrating a cover plate structure in the first embodiment.
Fig. 4 is a perspective view illustrating the configuration of an electrode assembly in the first embodiment.
Fig. 5 is a schematic sectional view illustrating a positive electrode lead plate and surrounding structure in the first embodiment.
Fig. 6 is an exploded perspective view illustrating the configurational relation between the cover plate and the inner gaskets in the first embodiment.
Fig. 7 is a perspective view illustrating an inner gasket and an upper spacer in the first embodiment.
Fig. 8 is a perspective view illustrating a second embodiment wherein an inner gasket and an upper spacer are formed as one single component.

### MODE FOR CARRYING OUT THE INVENTION

An energy storage device in accordance with embodiments of the present invention will be described below with reference to figures. The figures are schematic, and do not necessarily illustrate each component accurately.

The below-mentioned embodiments and its modification examples each provide a specific example of the present invention. Shape, material, components, arrangement and connection of the components, and order of manufacturing steps in the embodiment and its modification examples are only examples, and do not intend to limit the present invention. The components that are not recited in independent claims representing the most superordinate concept among the components in the embodiment and its modification examples are described as optional components.

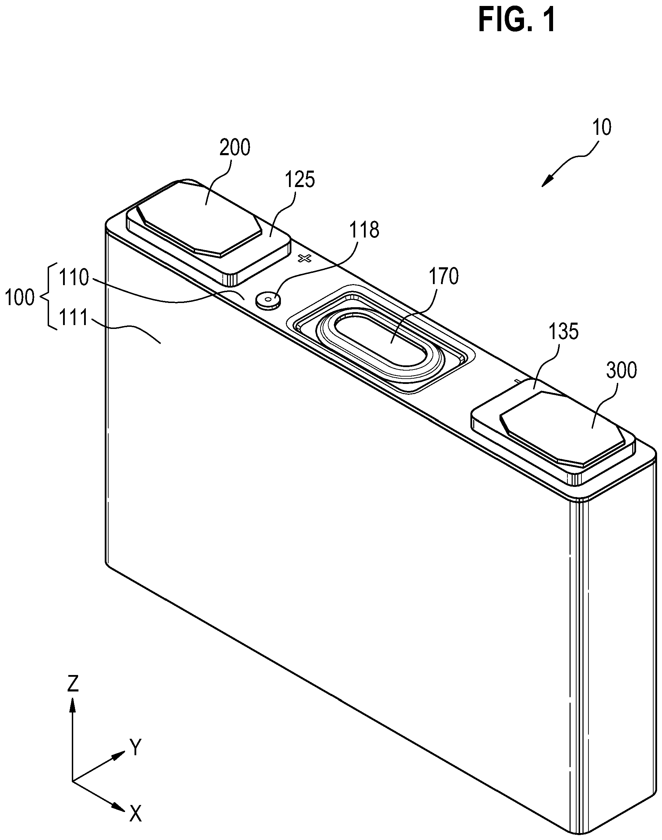

First, an energy storage device 10 in a first embodiment will be generally described below with reference to Fig. 1 to Fig. 3.

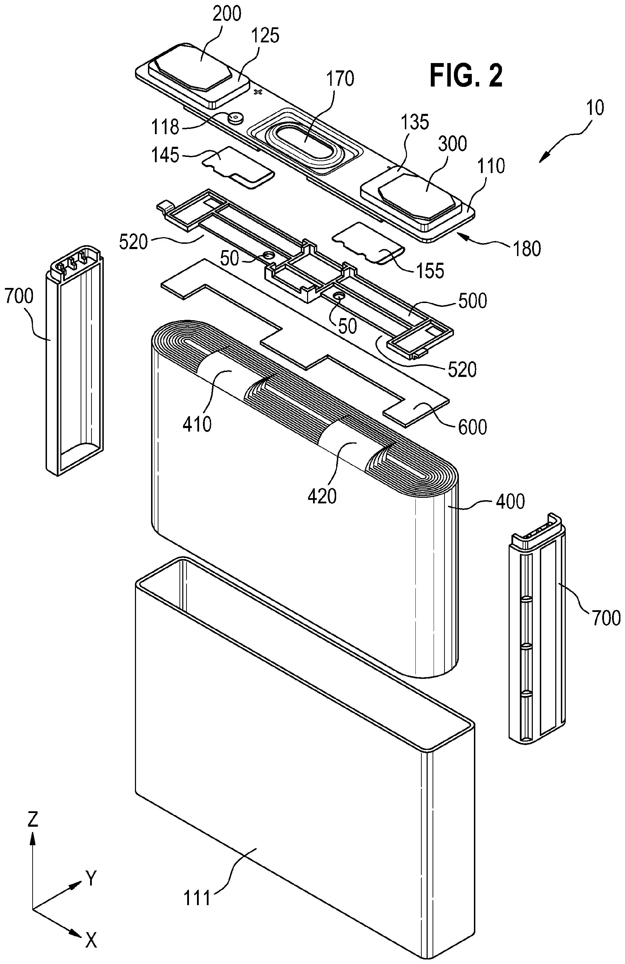

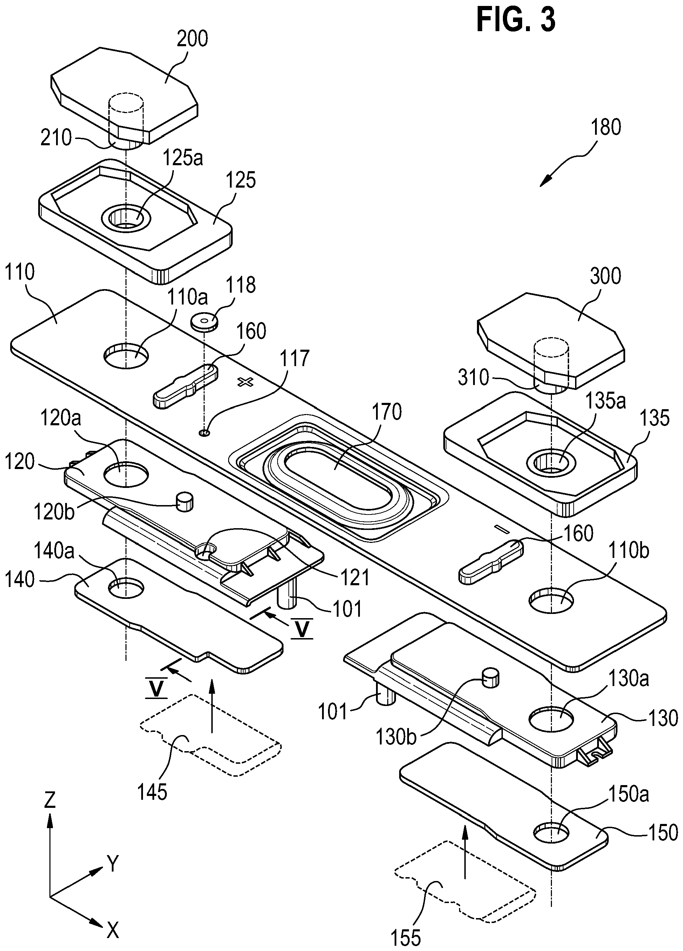

Fig. 1 is a perspective view illustrating outer appearance of the energy storage device 10 in the first embodiment. Fig. 2 is an exploded perspective view of the energy storage device 10 in the first embodiment. Fig. 3 is an exploded perspective view illustrating a cover plate structure 180 in the first embodiment. In Fig. 3, a positive electrode lead plate 145 and a negative electrode lead plate 155 that are bonded to a positive electrode current collector 140 and a negative electrode current collector 150, respectively, of the cover plate structure 180 are expressed as dotted lines.

In Fig. 1 and subsequent figures, for convenience of description, a vertical direction is defined as a Z-axis direction. However, in actuality, the vertical direction may be inconsistent with the Z-axis direction.

The energy storage device 10 is a secondary battery capable of charging and discharging electricity, more specifically, is for example a nonaqueous electrolyte secondary battery such as a lithium ion secondary battery. The energy storage device 10 is applied to, for example, electric cars (EVs), hybrid electric cars (HEVs), or plug-in hybrid electric cars (PHEVs). The energy storage device 10 is not limited to the nonaqueous electrolyte secondary battery, and may be a secondary battery other than the nonaqueous electrolyte secondary battery, or may be a capacitor.

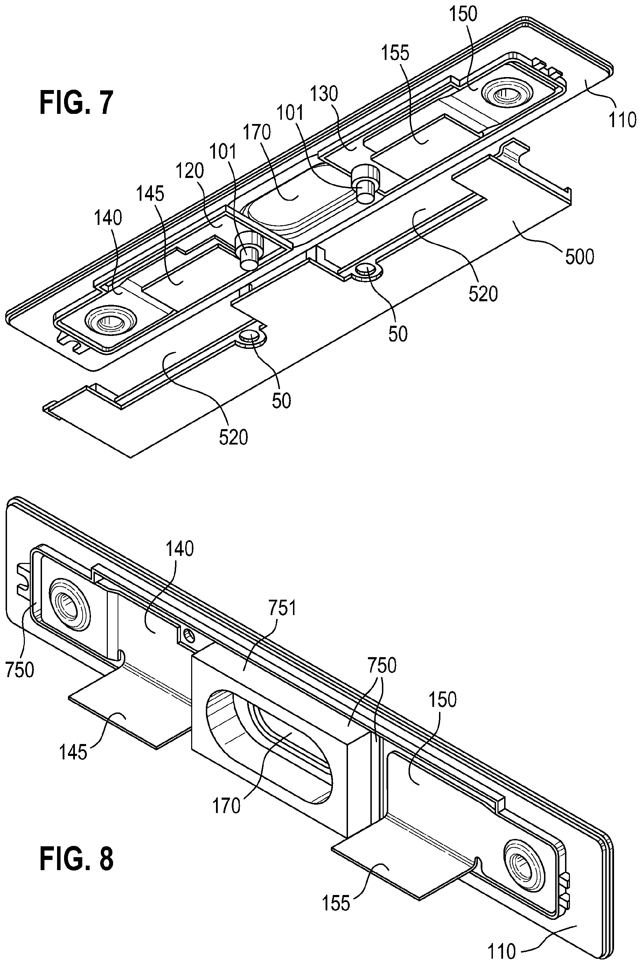

As illustrated in Fig. 1 and Fig. 2, the energy storage device 10 includes an electrode assembly 400, a case 100 that stores the electrode assembly 400, and conductive members electrically connected to the electrode assembly 400. In this embodiment, the energy storage device 10 includes the positive electrode current collector 140 and the negative electrode current collector 150 as the conductive members, and the cover plate structure 180 including the positive electrode current collector 140 and the negative electrode current collector 150 are disposed above the electrode assembly 400. In an alternative variant which is not shown in Fig. 1-3 but shown in Fig. 7 and 8, the negative electrode current collector 140 and the lead plate 145 are fused to form only one component and/or the positive electrode current collector 150 and the lead plate 155 are fused to form only one component.

The cover plate structure 180 has a cover plate 110 of the case 100, a positive electrode terminal 200, a negative electrode terminal 300, upper insulating members 125 and 135, inner gaskets 120 and 130, which for example function as insulating members, the positive electrode current collector 140, and the negative electrode current collector 150.

The positive electrode terminal 200 is electrically connected to the positive electrode of the electrode assembly 400 via the positive electrode current collector 140, and the negative electrode terminal 300 is electrically connected to the negative electrode of the electrode assembly 400 via the negative electrode current collector 150. The conductive members electrically connected to the electrode assembly 400, such as the positive electrode current collector 140, are insulated from the case 100 by using insulating members such as the inner gasket 120.

The upper insulating members 125 and 135, and the inner gaskets 120 and 130 each are an insulating member disposed between the wall of the case 100 and the conductive members. In this embodiment, each of the upper insulating members 125 and 135 and the inner gaskets 120 and 130 is disposed along the cover plate 110 that forms an upper wall among six walls constituting the outer shape of the substantially rectangular parallelepiped-shaped case 100.
The inner gaskets 120 and 130 each comprise a protruding part 101 which serves to form a connection with a breakthrough 50 of the upper spacer 500. This connection will be described below with reference to Fig. 7.

The energy storage device 10 in accordance with this embodiment further includes an upper spacer 500 and a cushioning sheet 600, which are disposed between the cover plate structure 180 and the electrode assembly 400.

The upper spacer 500 comprises two breakthroughs 50 which serve to form a connection with the inner gaskets 120, 130 of the cover plate structure 180. This connection will be described below with reference to Fig.7

Specifically, the upper spacer 500 is flat plate-shaped as a whole, and has two openings 520 into which the tabs 410 and 420 are inserted (through which the tabs 410 and 420 pass). In this embodiment, the openings 520 are notches in the upper spacer 500. The upper spacer 500 is made of an insulating material, for example, polycarbonate (PC), polypropylene (PP), polyethylene (PE), or polyphenylene sulfide resin (PPS).

The upper spacer 500 functions to directly or indirectly limit upward movement of the electrode assembly 400 (toward the cover plate 110), or to prevent short circuit between the cover plate structure 180 and the electrode assembly 400. The cushioning sheet 600 is made of a highly-flexible porous material such as foamed polyethylene, and functions to absorb shock between the electrode assembly 400 and the upper spacer 500.

Further the energy storage device comprises side spacers 700 which are disposed between side faces of the electrode assembly 400, which are located in the direction crossing the aligning direction (Z-axis direction) of the electrode assembly 400 and the cover plate 110, (that is, both side faces located in the X-axis direction in this embodiment) and the inner face of the case 100. The side spacers 700 function to limit the position of, for example, the electrode assembly 400. Like the upper spacer 500, the side spacers 700 are made of an insulating material such as PC, PP, PE, or PPS.

The energy storage device 10 may include, in addition to the components illustrated in Fig. 1 to Fig. 3, an insulating film that encloses the electrode assembly 400, a cushioning sheet disposed between the electrode assembly 400 and the bottom face of the case 100 (main body 111), and any other suitable component. An electrolyte solution (nonaqueous electrolyte) is filled in the case 100 of the energy storage device 10 and however, its illustration is omitted.

The case 100 is constituted of the rectangular tube-like main body 111 with a bottom, and the cover plate 110 that closes an opening of the main body 111. The case 100 is rectangular parallelepiped-shaped as a whole, and is constituted of the six walls as described above. Specifically, the case 100 has the upper wall formed of the cover plate 110, the lower wall opposed to the upper wall, and four side walls that connect the upper wall to the lower wall. That is, the main body 111 forms the lower wall and the four side walls.

The electrode assembly 400 and so on are stored in the case 100 and then, the cover plate 110 and the main body 111 are bonded to the case 100 to seal the case 100. The material for the cover plate 110 and the main body 111 is not specifically limited, but is preferably, weldable metal such as stainless steel, aluminum, or aluminum alloy.

As illustrated in Fig. 2 and Fig. 3, the cover plate 110 has a safety valve 170, an electrolyte solution filling port 117, through holes 110a and 110b, and two expanding portions 160 as projections. The safety valve 170 is opened when the internal pressure of the case 100 rises to emit gas in the case 100.

The electrolyte solution filling port 117 is a through hole for filling electrolyte solution during manufacturing of the energy storage device 10. As illustrated in Fig. 1 to Fig. 3, the cover plate 110 is provided with an electrolyte solution filling plug 118 that closes the electrolyte solution filling port 117. That is, during manufacturing of the energy storage device 10, the electrolyte solution is filled into the case 100 through the electrolyte solution filling port 117, and the electrolyte solution filling plug 118 is welded to the cover plate 110 to close the electrolyte solution filling port 117, thereby storing the electrolyte solution in the case 100.

The type of the electrolyte solution filled in the case 100 is not specifically limited as long as it does not impair performances of the energy storage device 10, and may be selected from various types.

Each of the two expanding portions 160 is a portion (projection) that is provided on the wall of the case 100 (the cover plate 110 in this embodiment) and expands (protrudes) to the opposite side to the inner gaskets 120 or 130. That is, in this embodiment, the two expanding portions 160 each expand toward the outside of the case 100. The expanding portions 160 function to improve the stiffness of the cover plate 110 that is the wall on which the expanding portions 160 are provided, and to limit the position of at least one of the upper insulating members 125 and 135 and the inner gaskets 120 and 130. In this embodiment, the expanding portions 160 are used to determine (limit) the position of the upper insulating member 125 (135). The back faces of the expanding portions 160 (the faces opposed to the electrode assembly 400) each have upwardly concave recess, and a portion of the recess engages with the engaging portion 120b (130b) of the inner gasket 120 (130). Thereby, the inner gasket 120 (130) is also located, and is fixed to the cover plate 110 in this state.

The upper insulating member 125 electrically insulates the positive electrode terminal 200 from the cover plate 110, and the inner gasket 120 electrically insulates the positive electrode current collector 140 from the cover plate 110. The upper insulating member 135 electrically insulates the negative electrode terminal 300 from the cover plate 110, and the inner gasket 130 electrically insulates the negative electrode current collector 150 from the cover plate 110. The upper insulating members 125 and 135 each may be also referred to as upper packing, and the inner gaskets 120 and 130 each may be also referred to as lower packing. That is, in this embodiment, the upper insulating members 125 and 135, and inner gaskets 120 and 130 also function to seal a section between the electrode terminal (200 or 300) and the case 100.

Like the upper spacer 500, the upper insulating member 125 and 135, and the inner gaskets 120 and 130 are made of an insulating material such as PC, PP, PE, or PPS. A through hole 121 that guides the electrolyte solution flowing through the electrolyte solution filling port 117 to the electrode assembly 400 is provided in inner gasket 120 immediately below the electrolyte solution filling port 117.

The positive electrode terminal 200 is electrically connected to the positive electrode of the electrode assembly 400 via the positive electrode current collector 140, and the negative electrode terminal 300 is electrically connected to the negative electrode of the electrode assembly 400 via the negative electrode current collector 150. That is, the positive electrode terminal 200 and the negative electrode terminal 300 are metal electrode terminals for leading electricity stored in the electrode assembly 400 to space outside the energy storage device 10, and introducing electricity into space within the energy storage device 10 to store electricity in the electrode assembly 400. The positive electrode terminal 200 and the negative electrode terminal 300 are made of aluminum or aluminum alloy.

The positive electrode terminal 200 is provided with a fastening portion 210 that fastens the positive electrode current collector 140 to the case 100, and the negative electrode terminal 300 is provided with a fastening portion 310 that fastens the negative electrode current collector 150 to the case 100.

The fastening portion 210 is a member (rivet) extending downward from the positive electrode terminal 200, and is inserted into a through hole 140a of the positive electrode current collector 140 and caulked. Specifically, the fastening portion 210 is inserted into a through hole 125a of the upper insulating member 125, a through hole 110a of the cover plate 110, a through hole 120a of the inner gasket 120, and the through hole 140a of the positive electrode current collector 140, and caulked. Thereby, the positive electrode terminal 200 is electrically connected to the positive electrode current collector 140, and the positive electrode current collector 140 along with the positive electrode terminal 200, the upper insulating member 125, and the inner gasket 120 is fixed to the cover plate 110.

The fastening portion 310 is a member (rivet) extending downward from the negative electrode terminal 300, and is inserted into a through hole 150a of the negative electrode current collector 150, and is caulked. Specifically, the fastening portion 310 is inserted into a through hole 135a of the upper insulating member 135, a through hole 110b of the cover plate 110, a through hole 130a of the inner gasket 130, and the through hole 150a of the negative electrode current collector 150, is caulked. Thereby, the negative electrode terminal 300 is electrically connected to the negative electrode current collector 150, and the negative electrode current collector 150 along with the negative electrode terminal 300, the upper insulating member 135, and the inner gasket 130 is fixed to the cover plate 110.

The fastening portion 210 may be integral with the positive electrode terminal 200, or the fastening portion 210 as an independent component may be fixed to the positive electrode terminal 200 by caulking, welding, or any other suitable means. The same applies to the fastening portion 310 and the negative electrode terminal 300.

The positive electrode current collector 140 is disposed between the electrode assembly 400 and the case 100, and electrically connects the electrode assembly 400 to the positive electrode terminal 200. The positive electrode current collector 140 is made of aluminum or aluminum alloy. In this embodiment, the positive electrode current collector 140 is electrically connected to the tab 410 on the positive electrode side of the electrode assembly 400 via the positive electrode lead plate 145.

The negative electrode current collector 150 is disposed between the electrode assembly 400 and the case 100, and electrically connects the electrode assembly 400 to the negative electrode terminal 300. The negative electrode current collector 150 is made of copper or copper alloy. In this embodiment, the negative electrode current collector 150 is electrically connected to the tab 420 on the negative electrode side of the electrode assembly 400 via the negative electrode lead plate 155.

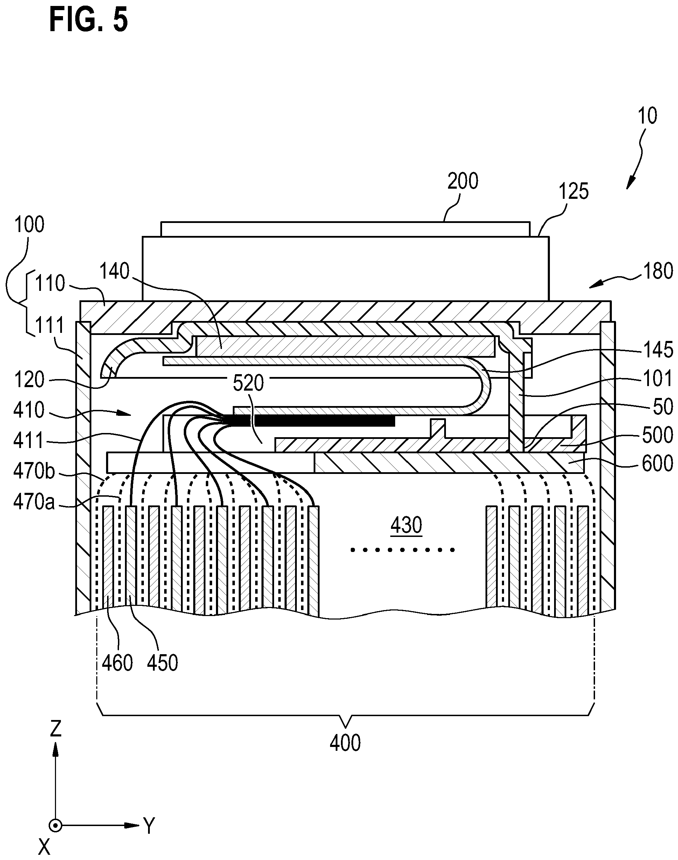

Details of a connection between the current collector and the tab via a lead plate will be described later with reference to Fig. 5.

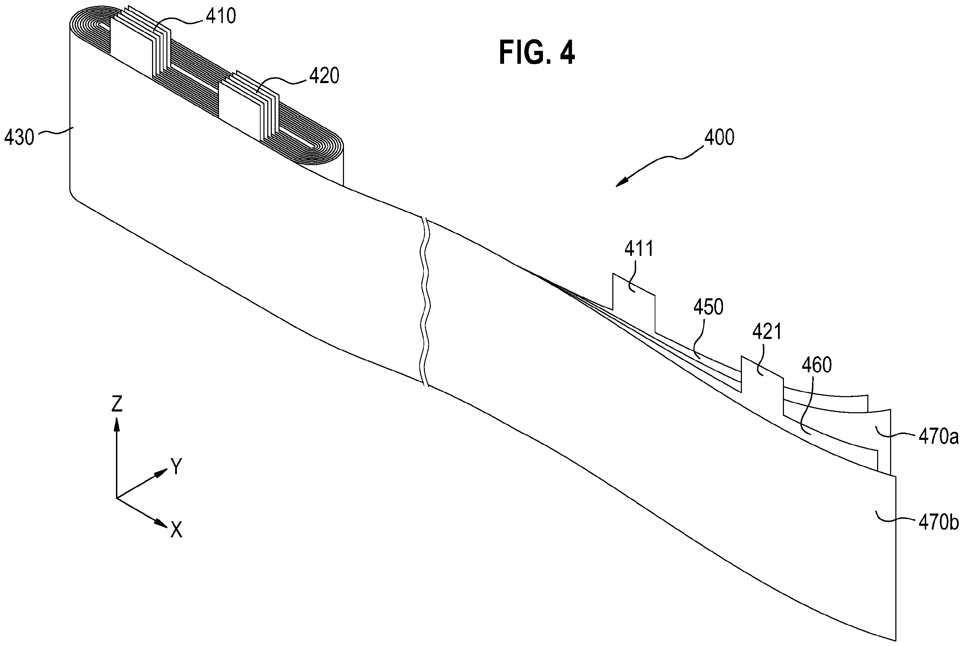

Next, the configuration of the electrode assembly 400 will be described below with reference to Fig. 4. Fig. 4 is a perspective view illustrating the configuration of the electrode assembly 400 in the embodiment. Fig. 4 is a partial exploded view illustrating the winding state of the electrode assembly 400.

The electrode assembly 400 is a power generating element capable of storing electricity, and as illustrated in Fig. 4, is formed by alternately stacking and winding a positive electrode 450, a separator 470a, a negative electrode 460, and a separator 470b. That is, the electrode assembly 400 is formed by stacking the positive electrode 450, the separator 470a, the negative electrode 460, and the separator 470b in this order to have an elliptical cross section. The electrode assembly 400 is formed such that the separators 470a and 470b protrude in a winding axis direction (a positive side and a negative side of the Z-axis direction). This can suppress short circuit between the electrode assembly 400 and another conductive member in the winding axis direction.

The positive electrode 450 is an electroplate in which a positive electrode active material layer is formed on the surface of a positive electrode substrate layer that is a long band-like metal foil made of aluminum or aluminum alloy. The positive electrode active material for the positive electrode active material layer may be any well-known positive electrode active material capable of occluding and ejecting lithium ions. Examples of the positive electrode active material include spinel compound including polyanion compound, lithium titanate, and lithium manganate such as LiMPO₄, LiMSiO₄, LiMBO₃ (M is one or two or more types of transition metal elements selected from Fe, Ni, Mn, Co, and so on), and lithium transition metal oxide such as LiMO₂ (M is one or two or more types of transition metal elements selected from Fe, Ni, Mn, Co, and so on).

The negative electrode 460 is an electroplate in which a negative electrode active material layer is formed on the surface of a negative electrode substrate layer that is a long band-like metal foil made of copper or copper alloy. The negative electrode active material for the negative electrode active material layer may be any well-known negative electrode active material capable of occluding and ejecting lithium ions. Examples of the negative electrode active material include lithium metal, lithium alloy (lithium-containing alloy such as lithium-aluminum, lithium-lead, lithium-tin, lithium-aluminum-tin, lithium-gallium, and Wood's alloy), alloy capable of occluding and ejecting lithium, carbon material (for example, graphite, hardly graphitized carbon, easy graphited carbon, low-temperature baked carbon, amorphous carbon), metal oxide, lithium metal oxide (ex. Li₄Ti₅O₁₂), and polyphosphoric acid compound.

The separators 470a and 470b each are a microporous sheet made of resin. The material for the separators 470a and 470b used in the energy storage device 10 may be any suitable well-known material unless the material impairs performances of the energy storage device 10.

The positive electrode 450 has a plurality of protruding portions 411 that protrude outward at one end of the winding axis direction. Similarly, the negative electrode 460 has a plurality of protruding portions 421 that protrude outward at the one end of the winding axis direction. The protruding portions 411 and the protruding portions 421 are portions that are not coated with the active material and leave the substrate layer exposed (active material-uncoated portion).

The winding axis is a virtual axis used as a central axis around which the positive electrode 450 and the negative electrode 460 is wound, and in this embodiment, the winding axis is a straight line parallel to the Z-axis direction that passes the center of the electrode assembly 400.

The protruding portions 411 and the protruding portions 421 are disposed at the end on the same side of the winding axis direction (the end on the positive side of the Z-axis direction in Fig. 4). The positive electrode 450 and the negative electrode 460 are stacked and thus, the protruding portions 411 and the protruding portions 421 are stacked at predetermined positions in the electrode assembly 400. Specifically, the positive electrode 450 is stacked by being wound, such that the plurality of protruding portions 411 are stacked at a predetermined circumferential position at one end of the winding axis direction. The negative electrode 460 is stacked by being wound, such that the plurality of protruding portions 421 are stacked at a predetermined circumferential position other than the position where the protruding portions 411 are stacked, at the one end of the winding axis direction.

As a result, the electrode assembly 400 is provided with the tab 410 formed by stacking the plurality of protruding portions 411 and the tab 420 formed by stacking the plurality of protruding portions 421. The tab 410 is collected, for example, toward the center of the stacking direction, and is bonded to the positive electrode lead plate 145, for example, by ultrasonic welding. The tab 420 is collected, for example, toward the center of the stacking direction, and is bonded to negative electrode lead plate 155, for example, by ultrasonic welding. The positive electrode lead plate 145 bonded to the tab 410 is bonded to the positive electrode current collector 140, and the negative electrode lead plate 155 bonded to the tab 420 is bonded to the negative electrode current collector 150.

The tabs (410, 420) leads and introduces electricity in the electrode assembly 400, and may also be referred to as "lead (portion)" and "current collecting portion".

The tab 410 is formed by stacking the protruding portions 411 that leave the substrate layer exposed and thus, does not contribute to power generation. Similarly, the tab 420 is formed by stacking the protruding portions 421 that leave the substrate layer exposed and thus, does not contribute to power generation. On the contrary, the portion of the electrode assembly 400 except for the tabs 410 and 420 is formed by stacking the portions coated with the active material on the substrate layer and thus, contributes to power generation. The portion will be hereinafter referred to as a power generating portion 430.

Next, an example of the configuration of the connection between the current collector and the tab via the lead plate will be described below with reference to Fig. 5.

Fig. 5 is a schematic sectional view illustrating the positive electrode lead plate 145 and its surrounding structure in the embodiment. Fig. 5 illustrates a partial cross section of the energy storage device 10 taken along a YZ plane passing a line V-V in Fig. 3, and does not illustrate the side spacers 700 on the negative side of the X-axis direction (See Fig. 2). The electrode assembly 400 is simplified for illustration.

As illustrated in Fig. 5, the tab 410 of the electrode assembly 400 is electrically connected to the positive electrode current collector 140 via the positive electrode lead plate 145 having a U-shaped cross section. The connection structure is produced, for example, according to a following procedure.

An end (first end) of the flat plate-like positive electrode lead plate 145 is bonded to the tab 410 of the electrode assembly 400 by, for example, ultrasonic welding. Further, an end (second end) opposite to the first end of the positive electrode lead plate 145 is bonded to the positive electrode current collector 140 integrated into the cover plate structure 180 by, for example, laser welding. Then, the positive electrode lead plate 145 is bent into a U-shape at a predetermined position between the first end and the second end. As illustrated in Fig. 5, this results in the connection structure between the tab 410 of the electrode assembly 400 and the positive electrode current collector 140 via the positive electrode lead plate 145 having the U-shaped cross section.

The upper spacer 500 is disposed between the side of the electrode assembly 400, on which the tab 410 is provided, and the cover plate 110. Describing in more detail, the upper spacer 500 separates the bonded portion of the tab 410 and the positive electrode lead plate 145 from the power generating portion 430 of the electrode assembly 400. The tab 410 is inserted into the opening 520 in the upper spacer 500. As illustrated in Fig. 5, the cushioning sheet 600 is sandwiched between the upper spacer 500 and the power generating portion 430 of the electrode assembly 400.

Fig. 5 illustrates the configuration around the positive electrode lead plate 145, and the configuration is the same as the configuration around the negative electrode lead plate 155. That is, the tab 420 of the electrode assembly 400 is electrically connected to the negative electrode current collector 150 via the negative electrode lead plate 155 having a U-shaped cross section (See Fig. 2, for example). The upper spacer 500 separates the bonded portion of the tab 420 and the negative electrode lead plate 155, and the power generating portion 430 of the electrode assembly 400, and the tab 420 is inserted into the opening 520 in the upper spacer 500.

The electrode assembly 400 is connected to the positive electrode current collector 140 and the negative electrode current collector 150 via the positive electrode lead plate 145 and the negative electrode lead plate 155, respectively, in this manner, enabling reduction of the length (the length in the winding axis direction (Z-axis direction)) of the tabs 410 and 420 of the electrode assembly 400.

That is, the width (the length in the winding axis direction (Z-axis direction)) of the electroplates of the positive electrode 450 and the negative electrode 460, which is required to manufacture the electrode assembly 400, can be reduced. This is advantageous in terms of the manufacturing efficiency of the electrode assembly 400.

The upper spacer 500 is disposed between the power generating portion 430 of the electrode assembly 400 and the cover plate 110, making the power generating portion 430 closer to the cover plate 110 via the upper spacer 500. This can increase the ratio of the electrode assembly 400 in the volume of the case 100.

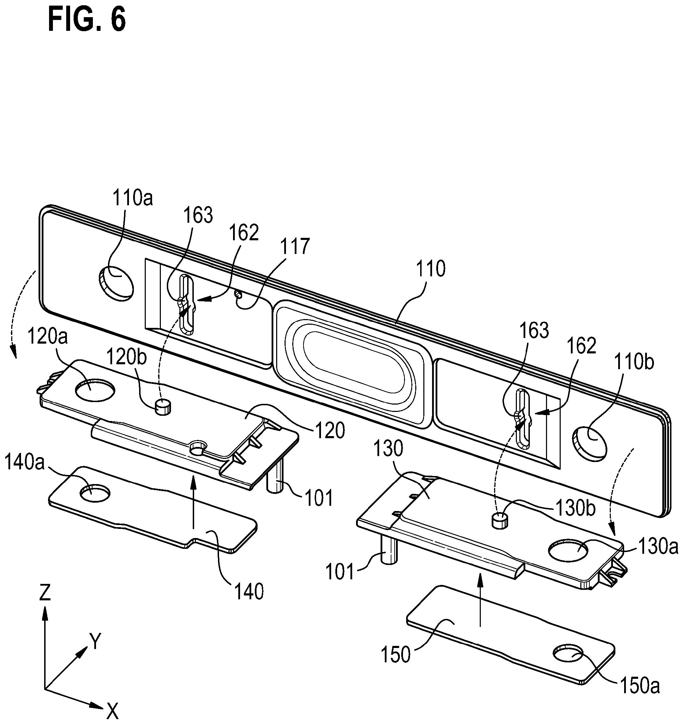

In the energy storage device 10 for example the inner gasket 120 made of resin is disposed between the conductive members such as the positive electrode current collector 140 and the cover plate 110 of the case 100, and the expanding portions 160 of the cover plate 110 limits the position of the inner gasket 120. The expanding portions 160 also function to improve the stiffness of the cover plate 110. These features will be described below with reference to Fig. 6.
The upper spacer 500 has a breakthrough 50, in which the protruding part 101 of the inner gasket 120 is inserted to form a tight connection between the upper spacer 500 and the inner gasket 120.

Fig. 6 is an exploded perspective view illustrating the configurational relation between the cover plate 110 and the inner gaskets 120 and 130 in the embodiment.

In Fig. 6, to illustrate recesses 162 formed on the back side of the respective expanding portions 160 in the cover plate 110, the cover plate 110 is separated from the inner gaskets 120 and 130, and is rotated about the X axis by 90 degrees. The inner gaskets 120 and 130 each comprise a protruding part 101 which is insertable into the breakthroughs 50 of the upper spacer 500.

As illustrated in Fig. 6, at least a portion of the inner gasket 120 is disposed between the positive electrode current collector 140 and the cover plate 110, and at least a portion of inner gasket 130 is disposed between the negative electrode current collector 150 as an example of a conductive member and the cover plate 110. In this embodiment, each of the inner gaskets 120 and 130 is an example of a first insulating member, and each of the positive electrode current collector 140 and the negative electrode current collector 150 is an example of a conductor insulated using the first insulating member.

The inner gaskets 120 and 130 have respective engaging portions that engage with respective limiting portions 163, which each are a portion of the recess 162 formed on the back side of the expanding portion 160 in the cover plate 110. Specifically, the inner gasket120 has the engaging portion 120b protruding toward the cover plate 110, and the inner gasket 130 has the engaging portion 130b protruding toward the cover plate 110.

The expanding portions 160 each are expanded from a portion of the cover plate 110 as a metal plate by press working or any other suitable means, and may be referred to as "bead". That is, the cover plate 110 has one or more expanding portions 160 to increase the stiffness of the cover plate 110.

The recess 162 is formed on the back side of the expanding portion 160 by expanding the expanding portion 160 to one side of the thickness direction of the cover plate 110, and the limiting portion 163 that is a portion of the recess 162 engages with the inner gasket 120 (130).

That is, the recess 162 has a concave portion other than the limiting portion 163 that limits the position of the inner gasket 120 (130). This means that recess 162 (the expanding portions 160 when viewed from the opposite side) functions to improve the stiffness of the entire cover plate 110 while limiting the position of the inner gasket 120 (130). In other words, recess 162 has further a concave portion that is not used for engagement with the inner gasket 120 (130) in addition to the portion used for the engagement. Thereby, the recess 162 (expanding portion 160) can increase the stiffness of the cover plate 110. Further, since the inner gasket 120 (130) only needs to have the engaging portion 120b (130b) that engages with only the limiting portion as a portion of the recess, the inner gasket 120 (130) can be reduced in weight.

The recesses 162 (expanding portions 160) having such function can be formed by press working of a portion of the cover plate 110 as described above and therefore, can be provided in the energy storage device 10 relatively readily.

As described above, the energy storage device 10 in this embodiment includes the insulating member inner gaskets 120 and 130 disposed between the conductive members and the cover plate 110 that is the wall of the case 100, and the stiffness of the cover plate 110 is improved with simple structure.
In Fig. 7 the upper spacer 500 and the two inner gaskets 120 (130) are shown in the first embodiment to illustrate the connection between the one breakthrough 50 of the upper spacer 500 and the protruding parts 101 of the inner gaskets 120, 130. The at least one protruding part 101 of the inner gaskets 120, 130 is insertable into the breakthroughs 50 of the upper spacer 500 in a way that the inner gaskets 120, 130 and the upper spacer 500 are connected tight.
The inner walls of the breakthroughs 50 of the upper spacer 500 and the protruding parts 101 of the inner gaskets 120, 130 for example are interconnected by thermofixing.
Furthermore in figures 7 and 8 the negative electrode current collector 140 and the lead plate 145 are fused to form only one component. In the same way the positive electrode current collector 150 and the lead plate 155 are fused to form only one component. This is advantageous because no welding of the negative electrode current collector 140 and the lead plate 145 and the positive electrode current collector 150 and the lead plate 155 is necessary. Furthermore there is a lesser number of components in the production line. So the production of the energy storage device 10 is more easy and faster.

In Figure 8 a second embodiment is illustrated, wherein the upper spacer 500 and the inner gaskets 120, 130 are formed as one single component 750. The single component 750 comprises a spacer 751. The spacer 751 for example surrounds the safety valve 170 from the inner side of the cover plate 110. The spacer 751 compensates tolerances of the electrode assembly 400. The material of the spacer 751 comprises for example a foam of polypropylene and/or polycarbonate.

### Other embodiments

The energy storage device of the present invention has been described with reference to the embodiment. However, the present invention is not limited to the embodiment. Various modifications of the embodiment and any combination of the above-mentioned components that could be devised by those skilled in the art fall within the scope of the present invention, unless they are deviated from the subject matter of the present invention as claimed in the appended claims.

For example, the number of electrode assembly 400 of the energy storage device 10 is not limited to one, and may be two or more. When the energy storage device 10 has the plurality of electrode bodies 400, as compared to the case where one electrode assembly 400 is stored in the case 100 having the same volume, dead space at corners of the case 100 can be reduced. In turn, the ratio of the electrode assembly 400 in the volume of the case 100 can be increased to increase the capacity of the energy storage device 10.

The electrode assembly 400 of the energy storage device 10 is not necessarily a wound-type one. The energy storage device 10 may have a stacked-type electrode assembly formed by stacking, for example, flat plates. The energy storage device 10 may have an electrode assembly formed by repeatedly making an accordion fold a long band-like plate.

The positional relation between the tab 410 on the positive electrode side and the tab 420 on the negative electrode side in the electrode assembly 400 is not specifically limited. For example, in the wound-type electrode assembly 400, the tab 410 may be opposed to the tab 420 in the winding axis direction. When the energy storage device 10 has the stacked-type electrode assembly, the tab on the positive electrode side and the tab on the negative electrode side may protrude in different directions when viewed in the stacking direction.

The electrode assembly 400 may have no tabs 410 and 420. That is, for example, the electrode assembly 400 may have an active material-uncoated portion protruding in the winding axis direction, and the active material-uncoated portion may be connected to an electrode terminal via a current collector. Also in this case, the same effects as in the embodiment can be achieved.

The present invention can be applied to energy storage devices such as a lithium ion secondary battery.

## Claims

1. Energy storage device (10) comprising an electrode assembly (400), a case configured to store the electrode assembly (400), at least one upper spacer (500) and at least one inner gasket (120, 130), **characterized in that** the upper spacer (500) comprises at least one breakthrough (50) and the inner gasket (120, 130) comprises at least one protruding part (101) whereat the at least one protruding part (101) of the inner gasket (120, 130) is insertable into the at least one breakthrough (50) of the upper spacer (500) in a way that the inner gasket (120, 130) and the upper spacer (500) are connected tight, or **characterized in that** the upper spacer (500) and the inner gasket (120, 130) are formed as one single component (750).

2. Energy storage device (10) according to claim 1, **characterized in that** the inner wall of the breakthrough (50) of the upper spacer (120, 130) and the protruding part (101) of the inner gasket (120,130) are interconnected by thermofixing.

3. Energy storage device (10) according to claim 1, **characterized in that** the single component (750) comprises a spacer (751) which functions as tolerance compensation of the electrode assembly (400).

4. Energy storage device (10) according to one of the preceding claims, wherein the energy storage device (10) is accommodated in a, particularly prismatic, case (100) comprising a can (111) and a cover plate (110), whereat the inner gasket (120, 130) or the one single component (750) is located at the cover plate (110) of the case (100).

5. Energy storage device (10) according to one of the preceding claims wherein the upper spacer (500) separates a bonded portion of tabs (410, 420) of the electrode assembly (400) and an electrode lead plate (145, 155) in a way that limits a movement of the electrode assembly (400).

6. Energy storage device (10) according to one of the preceding claims wherein the upper spacer (500) has at least two openings (520), through which tabs (410, 420) of the electrode assembly (400) pass.

7. Energy storage device (10) according to one of the preceding claims wherein the upper spacer (500) is made of an insulating material, particularly of polycarbonate, polypropylene, polyethylene or polyphenylene sulfide resin.

8. Energy storage device (10) according to one of the preceding claims wherein the inner gasket (120, 130) is disposed between a conductive member and a wall of the case (100) and functions as an insulating member.

9. Energy storage device (10) according to one of the preceding claims wherein the energy storage device (10) has two inner gaskets (120, 130) and one upper spacer (500).

## Patentansprüche

1. Energiespeichervorrichtung (10), eine Elektrodenanordnung (400), ein Gehäuse, gestaltet zur Aufnahme der Elektrodenanordnung (400), mindestens einen oberen Abstandshalter (500) und mindestens eine innere Dichtung (120, 130) umfassend,
**dadurch gekennzeichnet, dass** der obere Abstandshalter (500) mindestens einen Durchbruch (50) umfasst und die innere Dichtung (120, 130) mindestens einen hervorstehenden Teil (101) umfasst, wobei der mindestens eine hervorstehende Teil (101) der inneren Dichtung (120, 130) derart in den mindestens einen Durchbruch (50) des oberen Abstandshalters (500) einsetzbar ist, dass die innere Dichtung (120, 130) und der obere Abstandshalter (500) eng verbunden sind, oder **dadurch gekennzeichnet, dass** der obere Abstandshalter (500) und die innere Dichtung (120, 130) als eine einzelne Komponente (750) gebildet sind.

2. Energiespeichervorrichtung (10) nach Anspruch 1, **dadurch gekennzeichnet, dass** die Innenwand des Durchbruchs (50) des oberen Abstandshalters (120, 130) und der hervorstehende Teil (101) der inneren Dichtung (120, 130) durch Thermofixierung verbunden sind.

3. Energiespeichervorrichtung (10) nach Anspruch 1, **dadurch gekennzeichnet, dass** die einzelne Komponente (750) einen Abstandshalter (751) umfasst, der als Toleranzausgleich für die Elektrodenanordnung (400) dient.

4. Energiespeichervorrichtung (10) nach einem der vorhergehenden Ansprüche, wobei die Energiespeichervorrichtung (10) in einem, insbesondere prismaförmigen, Gehäuse (100) untergebracht ist, wobei das Gehäuse (100) eine Hülse (111) und eine Abdeckplatte (110) umfasst, wobei sich die innere Dichtung (120, 130) oder die einzelne Komponente (750) an der Abdeckplatte (110) des Gehäuses (100) befindet.

5. Energiespeichervorrichtung (10) nach einem der vorhergehenden Ansprüche, wobei der obere Abstandshalter (500) einen gebundenen Abschnitt aus Laschen (410, 420) der Elektrodenanordnung (400) und eine Elektrodenleiterplatte (145, 155) derart trennt, dass eine Bewegung der Elektrodenanordnung (400) begrenzt wird.

6. Energiespeichervorrichtung (10) nach einem der vorhergehenden Ansprüche, wobei der obere Abstandshalter (500) mindestens zwei Öffnungen (520) aufweist, durch welche die Laschen (410, 420) der Elektrodenanordnung (400) verlaufen.

7. Energiespeichervorrichtung (10) nach einem der vorhergehenden Ansprüche, wobei der obere Abstandshalter (500) aus einem isolierenden Material besteht, insbesondere aus Polycarbonat, Polypropylen, Polyethylen oder Polyphenylensulfidharz.

8. Energiespeichervorrichtung (10) nach einem der vorhergehenden Ansprüche, wobei die innere Dichtung (120, 130) zwischen einem leitenden Element und einer Wand des Gehäuses (100) angeordnet ist und als ein Isolationselement dient.

9. Energiespeichervorrichtung (10) nach einem der vorhergehenden Ansprüche, wobei die Energiespeichervorrichtung (10) zwei innere Dichtungen (120, 130) und einen oberen Abstandshalter (500) aufweist.

## Revendications

1. Dispositif de stockage d'énergie (10) comprenant un jeu d'électrodes (400), un boîtier configuré pour stocker le jeu d'électrodes (400), au moins une pièce d'espacement supérieure (500) et au moins un joint d'étanchéité interne (120, 130),
**caractérisé en ce que** la pièce d'espacement supérieure (500) comprend au moins une percée (50) et le joint d'étanchéité interne (120, 130) comprend au moins une partie saillante (101), la ou les parties saillantes (101) du joint d'étanchéité interne (120, 130) pouvant être insérées dans la ou les percées (50) de la pièce d'espacement supérieure (500) de telle manière que le joint d'étanchéité interne (120, 130) et la pièce d'espacement supérieure (500) soient reliés de manière étanche, ou **caractérisé en ce que** la pièce d'espacement supérieure (500) et le joint d'étanchéité interne (120, 130) sont formés en tant que composant unique (750).

2. Dispositif de stockage d'énergie (10) selon la revendication 1, **caractérisé en ce que** la paroi interne de la percée (50) de la pièce d'espacement supérieure (120, 130) et la partie saillante (101) du joint d'étanchéité interne (120, 130) sont interconnectées par fixage thermique.

3. Dispositif de stockage d'énergie (10) selon la revendication 1, **caractérisé en ce que** le composant unique (750) comprend une pièce d'écartement (751) qui fait office de compensation de tolérance du jeu d'électrodes (400) .

4. Dispositif de stockage d'énergie (10) selon l'une des revendications précédentes, dans lequel le dispositif de stockage d'énergie (10) est logé dans un boîtier particulièrement prismatique (100) comprenant un bidon (111) et une plaque de protection (110), le joint d'étanchéité interne (120, 130) ou le composant unique (750) étant situé au niveau de la plaque de protection (110) du boîtier (100).

5. Dispositif de stockage d'énergie (10) selon l'une des revendications précédentes, dans lequel la pièce d'espacement supérieure (500) sépare une partie liée de languettes (410, 420) du jeu d'électrodes (400) et une plaque de fil d'électrode (145, 155) d'une manière qui limite un mouvement du jeu d'électrodes (400).

6. Dispositif de stockage d'énergie (10) selon l'une des revendications précédentes, dans lequel la pièce d'écartement supérieure (500) comporte au moins deux ouvertures (520) à travers lesquelles passent des languettes (410, 420) du jeu d'électrodes (400).

7. Dispositif de stockage d'énergie (10) selon l'une des revendications précédentes, dans lequel la pièce d'écartement supérieure (500) est composée d'un matériau isolant, particulièrement d'une résine de polycarbonate, de polypropylène, de polyéthylène ou de sulfure de poly-phénylène.

8. Dispositif de stockage d'énergie (10) selon l'une des revendications précédentes, dans lequel le joint d'étanchéité interne (120, 130) est disposé entre un élément conducteur et une paroi du boîtier (100) et fait office d'élément isolant.

9. Dispositif de stockage d'énergie (10) selon l'une des revendications précédentes, dans lequel le dispositif de stockage d'énergie (10) comporte deux joints d'étanchéité interne (120, 130) et une seule pièce d'espacement supérieure (500).
